# EUROPEAN PATENT SPECIFICATION

(11) **EP 1 998 421 B1**
(45) Date of publication and mention of the grant of the patent: **09.10.2019**
(21) Application number: 08156851.1
(22) Date of filing: 23.05.2008
(51) Int. Cl.: H02G 3/30, F16L 3/04

(54) **Mounting clip device**
Montageklemmvorrichtung
Dispositif de pince de montage

(30) Priority: 29.05.2007 NO 20072718
(43) Date of publication of application: 03.12.2008
(73) Proprietor: Orshall Verksted AS, 4990 Sondeled (NO)
(72) Inventor: Bach, Roger I., NO-4993, Sundebru (NO)
(74) Representative: Langfeldt, Jens Fredrik Conradi

(56) References cited:
- DE-A1- 3 312 865
- FR-A- 1 312 586
- GB-A- 2 148 441
- US-A- 1 855 471
- US-A- 4 903 920
- US-A- 5 411 228

## Description

The present invention relates to a mounting clip device for securing a guide tube for wires, cable or pipes to a base, the clip being formed approximately as a U-shape with a curved portion and two branches, and wherein the clip has a fixing means selected from one of: a fixing leg that is an integral extension of at least one of the U's two branches, a fixing nail with sleeve therefor in connection with at least one of the U's two branches, and a lug projecting at a right angle from at least one of the U's two branches, the lug having a hole for engagement with a nail, screw or rivet.

When such guide tubes, moreover, are flexible and corrugated and are to be secured to bases such as trusswork, stud frameworks or to a building structure, for example, beams or building surfaces, it is a known phenomenon that such guide tubes are difficult to fasten to the base in such a way that they extend with maximum straightness. The reason for this is partly that the corrugated tubes are supplied coiled up in a bundle and therefore initially have a naturally curved shape. Moreover, the guide tube has a natural elasticity in the longitudinal direction.

The tensioning of such corrugated guide tubes to obtain straightness between the mounting clips is in practice impossible when employing the standard mounting clips that are in use, which is due to the fact that such clips are smooth on their interior surface and that the clip rests against a circumferential portion the guide tube which per se appears as smooth. Even if the clip is driven extra hard into the base, it is, because of the elasticity in the guide tube in the longitudinal direction, also almost impossible to mount the tube in such a way that it extends in a straight line between each mounting clip. Driving the clips in too hard may also damage the tube or have an adverse effect on its internal cross-section.

When mounting a guide tube of this kind, the person mounting the tube may use a nail that is driven in alongside side the tube and is bent around the tube in order to obtain better fixing and to be able to better extend the tube between the fastening points. However, the risk is then that the guide tube is damaged or compressed by the nail, which later makes it impossible or difficult to pull one or more wires, cables or pipes through the guide tube. Nevertheless, such use of a nail is forbidden by the authorities.

If the amount of wires, cable or pipes that is to be passed through the guide tube will cover a large part of the internal cross section of the tube, there may, at a compression of the guide tube at the fastening points or at a visible arcuate form between the fastening points, arise major problems in passing wires, cable or pipes through the guide tube, even though it has been possible to pass a draw cord or draw string though the guide tube. This is because the internal cross section of the guide tube may have been reduced due the bending of the tube at the fastening points or that a repeated arcuate form of the guide tube between the fastening points causes the overall pull-through resistance of the guide tube to be too great along the guide distance,

When installing such flexible guide tubes which are to be embedded in a concrete structure and where the tubes are fastened to the formwork before the concrete is poured into the formwork, it is of course important that such guide tubes be mounted in an optimal manner so as to prevent extra sagging of the guide tube from occurring when the concrete is poured into the formwork, which may subsequently make the feed-through of wires, cable or pipes difficult.

If the flexible, corrugated guide tube is laid so as to be visible, it will be seen, when using ordinary clips, that the guide tube extends in an arcuate form between each clip, which aesthetically is not particularly satisfactory. To avoid this, it is possible to mount the clips at shorter distances apart, which however makes the operation more expensive.

Tube clips of plastic for mounting such flexible, corrugated guide tubes are known, where a first type is designed for securing to bars in, inter alia, fuse boxes, and a second type is a two-part type and based on being usable on tubes of different diameter, a first part having holes for screwing to a base and a second part being designed for snap fastening to the first part, so that the two parts together fix the tube. This is however a costly clip which takes more time to mount than a clip that only needs to be nailed in place.

In connection with the securing of mounting clips on such guide tubes, whether they are externally smooth or flexible and corrugated, there has long been a need to be able to position the clip on the guide tube without the clip falling off the guide tube whilst it is being fastened to the base, or without any need to hold the clip whilst it is driven into the base. This has been an express desire in particular in connection with the use of clips made of sheet metal or moulded metal.

A nail-in clip of plastic, for example, of the type TC14-20, has a branch of the clip provided with a sleeve for a nail, whilst the remaining part of the clip has an arched form, a part of the free end of the arch being elastically resilient, so that the clip can be snapped onto the guide tube or onto a standard smooth cable before the clip is nailed in place to the base. Such a clip is basically optimally useful for a rigid guide tube which has a smooth external surface and for cable that has marked rigidity. However, this clip type is less suitable for use in connection with flexible, corrugated guide tubes, as on deliberate stretching of the guide tube, the clip will not provide sufficient friction against the guide tube, not least because the non nail provided branch of the clip is elastically resilient.

Thus, the known solutions either have limited application, are awkward to mount or costly, or are also adapted to other use and therefore do not provide an optimal solution for the tasks that are to be solved.

Document US5411228 describes a mounting clip device which could be used for securing an externally corrugated guide tube for wires, cable or pipes to a base, the clip being formed approximately as a U-shape with a curved portion and two branches and wherein the clip has a fixing means constituted of a fixing nail with sleeve therefor in connection with at least one of the U's two branches. The interior surface of the clip is configured having at least one boss or stud located on at least one of the respective branches of the clip below the curved portion, said at least one boss or stud is configured to be wholly or partly enterable into a depression between adjacent corrugations on the guide tube. The at least one boss or stud allows the clip, when applied onto the guide tube, to provide axial fixation of the guide tube in its longitudinal direction.

Document US4903920 describes a mounting clip device for securing a wire, cable or pipe to a base, the clip being formed approximately as a U-shape with a curved portion and two branches, and wherein the clip has a fixing means constituted of a fixing nail with sleeve therefor in connection with at least one of the U's two branches. The interior surface of the clip is configured having at least one boss or stud located on at least one of the respective branches of the clip below the curved portion. The at least one boss or stud allows the clip, when applied onto the guide tube, to provide a snap engagement with a cable.

Document FR1312586 describes a mounting clip device for securing an externally corrugated guide tube for wires, cable or pipes to a base, the clip being formed approximately as a U-shape with a curved portion and two branches, and wherein the clip has a fixing means constituted of a fixing nail with sleeve therefor in connection with at least one of the U's two branches. The interior surface of that U-shaped clip is configured having a rib which is configured to be wholly or partly enterable into a depression between adjacent corrugations on the guide tube. The interior surface of the clip are such that when applied onto the guide tube, to provide axial fixation of the guide tube in its longitudinal direction and to form snap engagement with the guide tube by the outer surface of the guide tube.

Although the problems outlined above have existed for at least 30 years, to date no solutions have been indicated that permit a simple, quick, inexpensive and not least not-slip securing of the known flexible guide tubes, and allow the mounting clips in general to be secured to corrugated guide tubes.

The invention is defined in the appended independent claim 1.

Advantageous embodiments of the invention are defined in the appended dependent claims 2 to 6.

The invention will now be explained in more detail with reference to the attached drawing figures.
Fig. 1 shows a first embodiment of the device.
Fig. 2 shows the device according to Fig. 1 fastened to a corrugated guide tube.
Fig. 3 shows the section III-III shown in Fig. 2
Fig. 4 shows the section IV-IV shown in Fig. 2
Fig. 5 is an end view of the embodiment shown in Fig. 1
Fig. 6 is a perspective view of a second embodiment of the device, and Fig. 7 shows the section VII-VII shown in Fig. 6.
Figs. 8 and 9 show respectively an end view and a perspective view of a third embodiment of the device.
Figs. 10 and 11 show a fourth embodiment of the device, and Figure 12 shows the section XII-XII in Fig. 11.
Fig. 13 shows a fifth embodiment of the device as a minor modification of the device according to Figs. 10 - 12.
Figs. 14 and 15 are perspective views of a sixth embodiment of the device, and Fig. 16 is an end view of the device.
Figs. 17 and 18 are perspective views of a seventh embodiment of the device, and Fig. 19 is an end view of the device.
Figs. 20 and 21 are perspective views of an eighth embodiment of the device, Fig. 22 is an end view of the device and Fig. 23 shows the section XXIII-XXIII in Fig. 20.
Figs. 24 and 25 are perspective views of a ninth embodiment of the device, and Fig. 26 shows the device seen from below.
Figs. 27 and 28 are perspective views of a tenth embodiment of the device, Fig. 29 shows the device from below, and Fig. 30 shows the section XXX-XXX in Fig. 28.
Fig. 31 is a perspective view of an eleventh embodiment of the device.
Fig. 32 is a perspective view of a twelfth embodiment of the device.
Fig. 33 is a perspective view of a thirteenth embodiment of the device.
Fig. 34 is a perspective view of a fourteenth embodiment of the device.

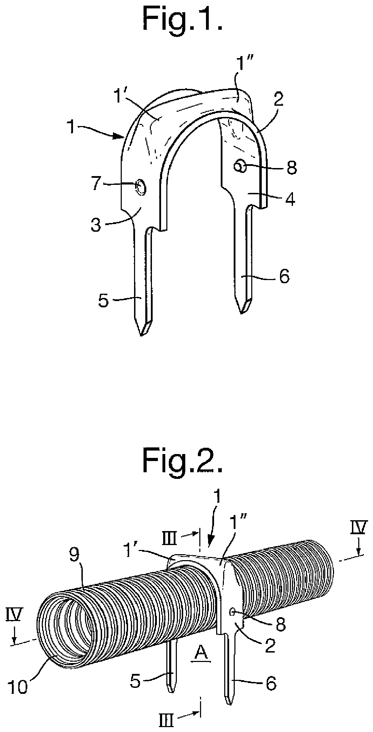

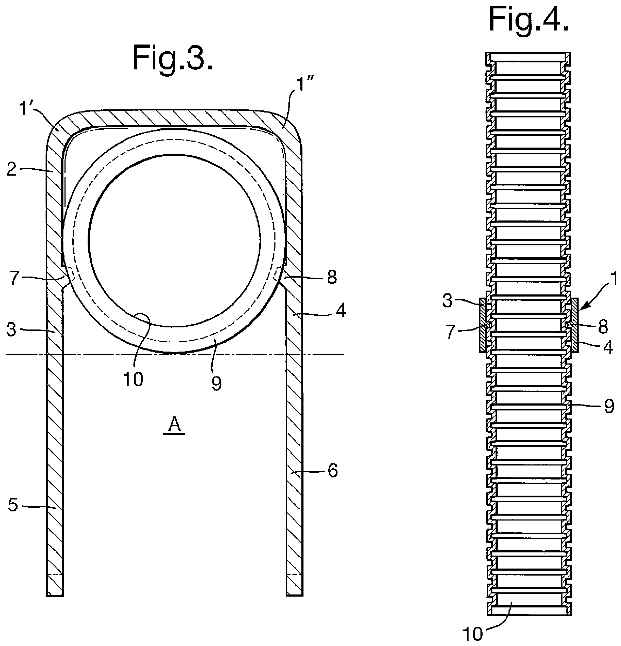

Figs. 1 - 5 show a mounting clip 1 according to the invention, which is based on a mounting clip 1 of metal intended for pipes and cable, optionally provided with striking bosses 1', 1" for receiving hammer blows. The clip has a general U-shape with a curved portion 2 and branches 3, 4. In extension of the U's branches 3, 4 and in one piece therewith are provided fixing legs 5, 6 configured as tacks for hammering into a base A, for example, a plate, an upright, a beam or the like. At least one of, but preferably both of, the branches 3, 4 are configured having at least one projection 7, 8 for wholly or partly entering into a respective depression 9' of the guide tube 10 corrugations 9.

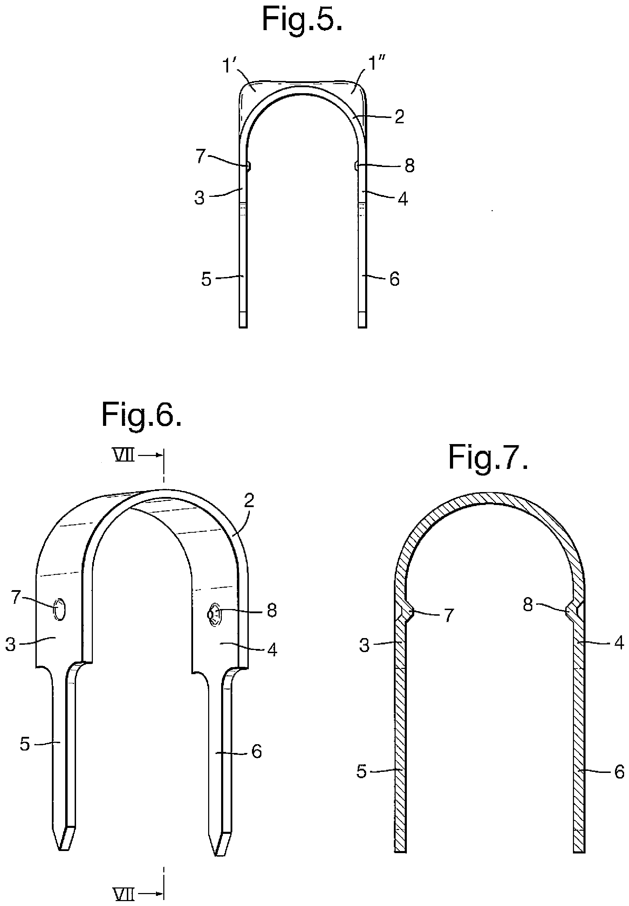

The embodiment in Figs. 6 and 7 is the same as that shown in Figs. 1 - 5, with the exception of the striking bosses 1', 1".

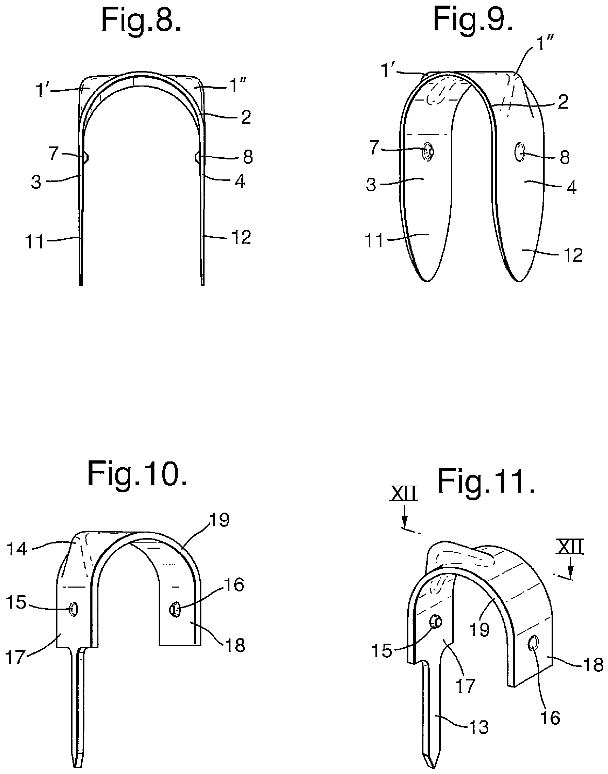

Variants of the embodiments in Figs. 1 - 5 and in Figs. 6 and 7 are shown in Figs. 8 and 9 respectively. In Figs. 8 and 9, the tacks are replaced by flattened, thin, tapering or triangle-like elements 11, 12 which form the fixing legs of the clip. These elements will be particularly suitable when a clip is to be fixed in, for example, plasterboard or other porous material. It has been found that such elements give the clip good holding power, with the possibility of pull-out resistance of about 10-20 kg, depending on whether one or two fixing legs are used.

The clip shown in Figs. 10 -12 corresponds to that shown in Figs. 1 - 5, with the difference that it has just one fixing leg 13 and one striking boss 14. The projections 15, 16 are located on the respective branches 17, 18 of the clip, below the curved portion 19. In the case of a clip of metal, optionally with stiffeners such as striking bosses 1', 1", a rigidity is obtained that renders a clip of this new type sufficiently rigid to allow it to be operationally satisfactory whether it has one fixing leg or two.

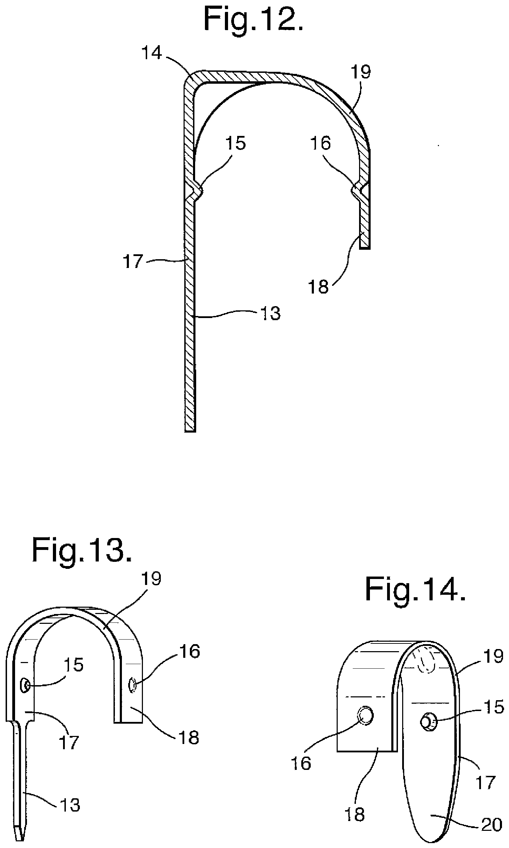

The clip shown in Fig. 13 is like the clip shown in Figs. 10 -12, but without the striking boss 14.

The clip shown in Fig. 14 - 16 has a similar function to the clip shown in Figs. 10 - 12 and 13, but with the difference that the fixing leg is configured as a flattened, thin, tapering or triangle-like element 20. Such an element will be particularly suitable when a clip is to be fixed in, for example, plasterboard or other similar porous material. It has been found that such elements give the clip good holding power, with the possibility of pull-out resistance of about 10 kg when one fixing leg is used. As an example, the clip is shown in these figures mounted on an externally smooth guide tube 21, although it should be understood that this embodiment will be equally suitable for corrugated guide tubes.

The present invention will also be usable in connection with moulded mounting clips of a moulded plastics material or moulded of metal.

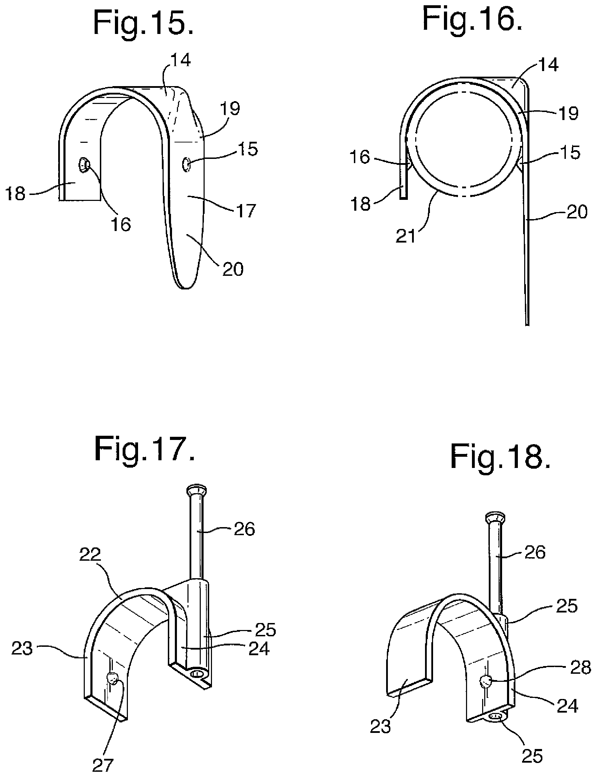

Figs. 17 - 19 show such a mounting clip where, as an example, the use of a fixing nail is shown, although a fixing screw could have been used. Here, a U-shaped clip is used that has a curved portion 22 and two branches 23, 24, wherein one 24 of the branches has a sleeve 25 for fixing nail 26. Projections 27, 28 are shown on the respective branches 23, 24.

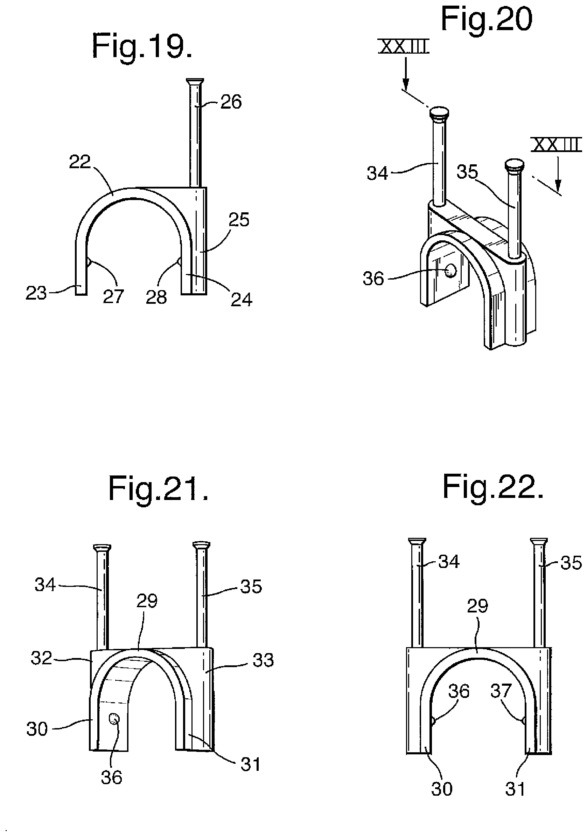

The embodiment shown in Figs. 20 - 23 differs from that shown in Figs. 17 - 19 in that here there is a U-shaped clip with a curved portion 29 and two branches 30, 31. Both branches have attachment and through-sleeve 32, 33 for fixing nails 34, 35. Projections 36, 37 are integrally arranged on respective branch 30, 31. If a clip with two fixing nails is used, it may be sufficient to have one projection, but normally it is preferable to have a projection on each branch. If the clip has only one fixing nail, as shown in Figs. 17-19, it may be advantageous to give the branch not run through by the fixing nail a form which makes this branch not as elastically resilient as a traditional plastic mounting clip.

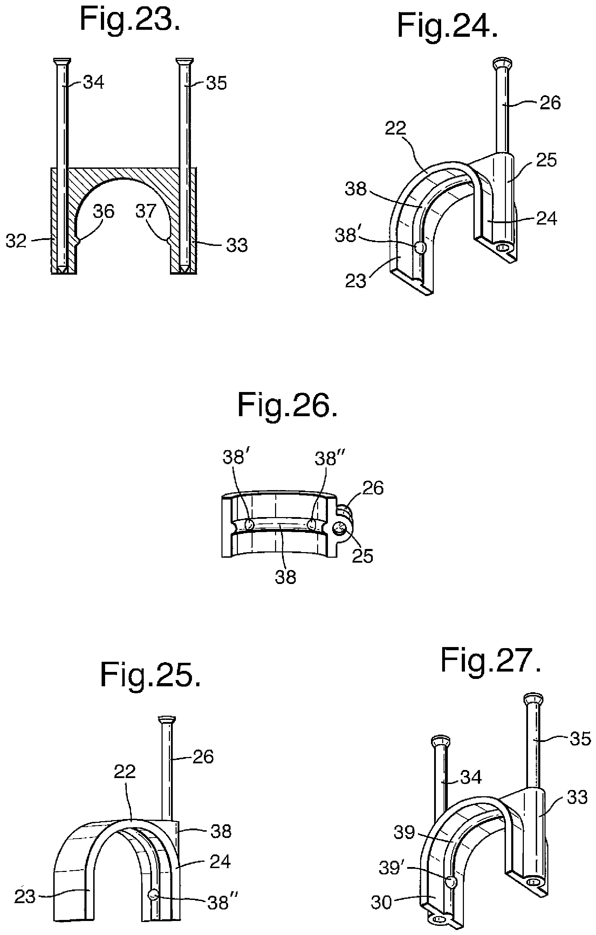

Figs. 24 - 26 show a mounting clip where initially there is no possibility of snap-fastening in connection with a flexible corrugated guide tube, unless the branch of the clip without a fixing nail is given a slight inward bend (not shown). The same references numerals as those in Figs. 17 - 19 are used here, except that the projections 27, 28 have been replaced by a rib 38. If it is desired to have a snap-on option, the rib 38 may be provided at its end region with a boss or stud 38', 38".

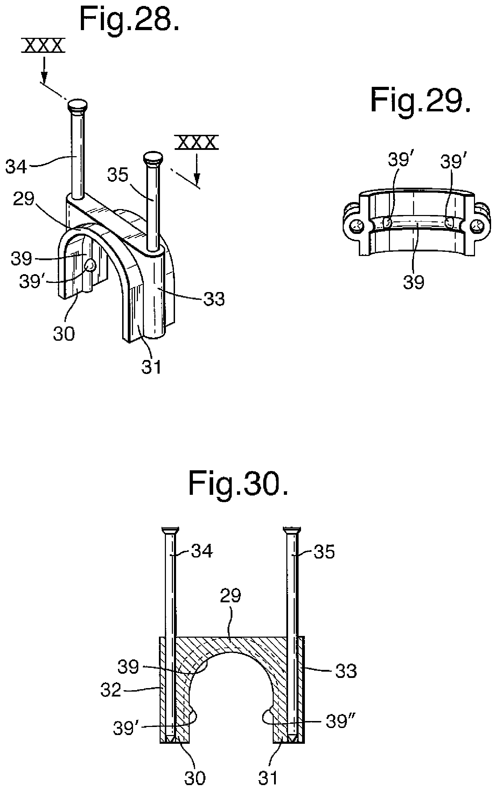

The embodiment shown in Figs. 27 - 30 differs from that shown in Figs. 20 - 23 in that in this case a rib 39 is used instead of the projections 36, 37. The reference numerals given in Figs. 20 - 23 are otherwise also used in Figs. 27 - 30. This clip initially does not have a snap function, but by using bosses or studs 39', 39" in connection with the rib 39, such a snap action can be obtained.

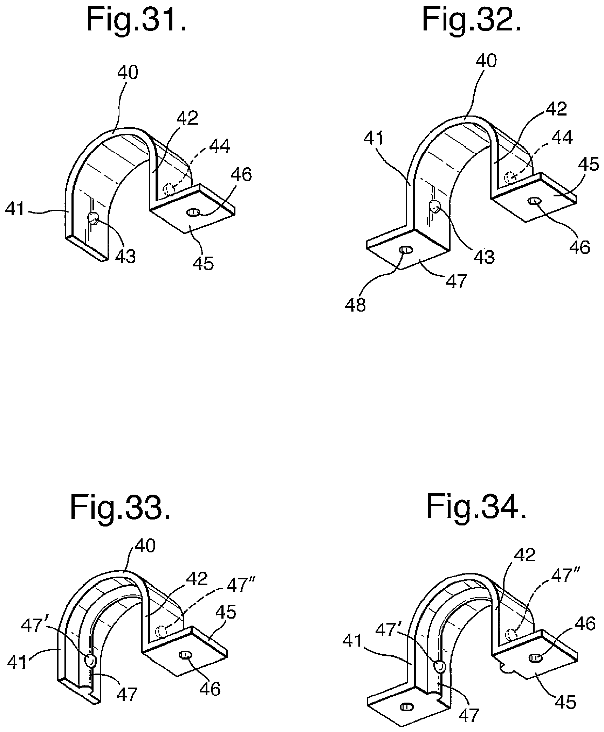

Figs. 31 and 32 show embodiments where the clip is U-shaped with a curved portion 40 and two branched 41, 42, each branch having a projection 43, 44. In Fig. 31 it is shown that the branch 42 has a fixing lug 45 projecting at an angle and having a hole 46 for a fixing nail, fixing screw or fixing rivet. The embodiment in Fig. 32, unlike the embodiment in Fig. 31, has two projecting fixing lugs 45, 46. These two embodiments are suitable for manufacture either from sheet metal or moulded in metal or plastics material and are suitable for both smooth and corrugated guide tubes. The ordinary known clips of this type have no projection.

In the embodiment shown in Figs. 33 and 34 the same reference numerals are used as those in Figs. 31 and 32. The difference here is that the projections 43, 44 have been replaced by a rib 47. The rib may optionally be equipped with a boss or stud 47' for improved possibility of snap engagement with a flexible, corrugated guide tube. The embodiments with a rib in Figs. 33 and 34, like the embodiments in Figs. 24 - 30 are only intended for use with flexible corrugated guide tubing.

In use, all the embodiments that have been shown and described will be suitable for cooperation with flexible, corrugated guide tubes.

Although for a snap-on possibility for the clips with a rib, there is indicated the addition of a boss or stud, an appropriate configuration of the rib, for example, by increasing the height of the rib slightly at it end region, in cooperation with a certain elastic resilience in the clip, may be sufficient to ensure that the clip remains in place with sufficient snap-like engagement on the corrugated guide tube whilst the tube is nailed in place.

Thus, the illustrated embodiments will in general, for use on both types of guide tubing, cause the clip to rest on the guide tube whilst it is nailed or secured to a base A, and in use with corrugated guide tubes will allow the tube to be stretched sufficiently whilst being secured, so that the guide tube has minimum internal pulling resistance when wires, cable or pipes are to be pulled through the guide tube.

The guide tube, irrespective of having smooth or corrugated surface, or the base on which the guide tube is to be secured, does not form part of the mounting clip as claimed.

## Claims

1. A mounting clip device (1) for securing an externally corrugated guide tube (10) for wires, cable or pipes to a base, the clip (1) being formed approximately as a U-shape with a curved portion (2) and two branches (3,4), and wherein the clip (1) has a fixing means selected from one of: a fixing leg (5,6) that is an integral extension of at least one of the U's two branches, a fixing nail (26) with sleeve (25) therefor in connection with at least one of the U's two branches, and a lug (45) projecting at a right angle from at least one of the U's two branches, the lug having a hole for engagement with a nail, screw or rivet,
wherein the U-shaped clip on its interior surface is configured having at least one boss or stud (7;8;15;16;27;28;36;37;38';38";38';39";43;44;47';47") located on at least one of the respective branches (3,4) of the clip (1) below the curved portion (2), said at least one boss or stud (7;8;15;16;27;28;36;37;38';38";38';39";43;44;47';47") is configured to be wholly or partly enterable into a depression (9') between adjacent corrugations on the guide tube (10), the at least one boss or stud (7;8;15;16;27;28;36;37;38';38";38';39";43;44;47';47") allows the clip (1), when applied onto the guide tube (10), to form snap engagement with the guide tube and to provide axial fixation of the guide tube (10) in its longitudinal direction.

2. A device (1) as disclosed in claim 1, **characterised in that** a rib (38) extends on the interior surface of the U from one branch thereof via the U's curved portion to the other branch thereof.

3. A device (1) as disclosed in claim 1 or 2, **characterised in that** the U-shaped clip (1) has at least one boss (7,8; 15,16; 27,28; 36,37; 38',38"; 38',39"; 43,44; 47',47") on each of said branches.

4. A device (1) as disclosed in any one of claims 1 - 3, **characterised in that** the fixing leg (5,6) is configured either as a rigid tack or as a flat, thin tapering plate.

5. A device (1) as disclosed in any one of claims 1 - 4, **characterised in that** the clip (1) is made of a sheet material of metal, moulded metal or moulded plastics material.

6. A device (1) as disclosed in any one of claims 1 - 5, **characterised in that** the clip (1) is made of moulded metal or moulded plastics material, and that both branches (3,4) of the U-shaped clip are equipped with said fixing nail sleeve (26) or have said projecting lug (45).

## Patentansprüche

1. Montageklemmvorrichtung (1) zur Befestigung eines äußerlich gewellten Führungsrohrs (10) für Drähte, Kabel oder Leitungen an einem Basisteil, wobei die Klemme (1) ungefähr eine U-Form mit einem gekrümmten Teil (2) und zwei Zweigen (3,4) aufweist, und wobei die Klemme (1) ein Fixierungsmittel aufweist, ausgewählt aus einem von den Folgenden: einem Fixierungsbein (5,6), das eine integrale Verlängerung mindestens eines der zwei Zweigen des Us ist, einem Fixierungsnagel (26) mit Hülse (25) dafür in Verbindung mit mindestens einem der zwei Zweigen des Us und einem Anschlussstück (45), das in einem rechten Winkel von mindestens einem der zwei Zweigen des Us vorsteht, wobei das Anschlussstück ein Loch zum Eingriff mit einem Nagel, einer Schraube oder einer Niete aufweist, wobei die U-förmige Klemme auf der Innenfläche mit mindestens einem Vorsprung oder Ansatz (7;8;15;16;27;28;36;37;38';38";38';39";43;44;47';47") ausgelegt ist, der auf mindestens einem der jeweiligen Zweigen (3,4) der Klemme (1) unterhalb des gekrümmten Teils (2) angeordnet ist, wobei der mindestens eine Vorsprung oder Ansatz (7;8;15;16;27;28;36;37;38';38";38';39";43;44;47';47") dafür ausgelegt ist, ganz oder teilweise in eine Vertiefung (9') zwischen angrenzenden Wellen auf dem Führungsrohr (10) eindringen zu können, wobei der mindestens eine Vorsprung oder Ansatz (7;8;15;16;27;28;36;37;38';38";38';39";13;11;17';17") es ermöglicht, dass die Klemme (1), wenn sie auf dem Führungsrohr (10) angeordnet ist, mit dem Führungsrohr in Schnappeingriff geht und eine axiale Fixierung des Führungsrohrs (10) in der Längsrichtung bereitstellt.

2. Vorrichtung (1) nach Anspruch 1, **dadurch gekennzeichnet, dass** eine Rippe (38) sich auf der Innenfläche des Us von einem Zweig davon über den gekrümmten Teil des Us zum anderen Zweig davon erstreckt.

3. Vorrichtung (1) nach Anspruch 1 oder 2, **dadurch gekennzeichnet, dass** die U-förmige Klemme (1) mindestens einen Vorsprung (7,8; 15,16; 27,28; 36,37; 38',38"; 38',39"; 43,44; 47',47") auf jedem der Zweigen aufweist.

4. Vorrichtung (1) nach einem der Ansprüche 1 bis 3, **dadurch gekennzeichnet, dass** das Fixierungsbein (5,6) entweder als ein steifer Stift oder als eine flache, dünne sich verjüngende Platte ausgeformt ist.

5. Vorrichtung (1) nach einem der Ansprüche 1 bis 4, **dadurch gekennzeichnet, dass** die Klemme (1) aus einem Bogenmaterial aus Metall, geformten Metall oder geformten Kunststoffmaterial hergestellt ist.

6. Vorrichtung (1) nach einem der Ansprüche 1 bis 5, **dadurch gekennzeichnet, dass** die Klemme (1) aus geformtem Metall oder geformtem Kunststoffmaterial hergestellt ist, und dass die beiden Zweige (3,4) der U-förmigen Klemme mit der Fixierungsnagelhülse (26) versehen sind oder das vorspringende Anschlussstück (45) aufweisen.

## Revendications

1. Dispositif de pince de montage (1) pour fixer un tube de guidage ondulé extérieurement (10) pour des fils, des câbles ou des tuyaux à une base, la pince (1) se présentant approximativement sous la forme d'un U avec une partie incurvée (2) et deux branches (3,4), et dans lequel la pince (1) comporte un moyen de fixation choisi parmi l'un des suivants : une jambe de fixation (5,6) qui est une extension intégrale d'au moins l'une des deux branches de l'U, un clou de fixation (26) avec un manchon (25) pour celui-ci en liaison avec au moins l'une des deux branches de l'U, et une patte (45) faisant saillie à angle droit à partir d'au moins l'une des deux branches de l'U, la patte ayant un trou pour l'engagement avec un clou, une vis ou un rivet,
dans lequel la pince en U sur sa surface intérieure est configurée pour présenter au moins un bossage ou goujon (7;8;15;16;27;28;36;37;38';38";38';39";43;44;47';47") situé sur au moins une des branches respectives (3,4) de la pince (1) au-dessous de la portion incurvée (2), ledit au moins un bossage ou goujon (7;8;15;16;27;28;36;37;38';38";38';39";43;44;47';47") étant configuré de manière à pouvoir entrer totalement ou partiellement dans un creux (9') entre des ondulations adjacentes sur le tube de guidage (10), ledit au moins un bossage ou goujon (7;8;15;16;27;28;36;37;38';38";38';39";13;11;17';17") permettant à la pince (1), lors de l'application de celle-ci sur le tube de guidage (10), de former un engagement par encliquetage avec le tube de guidage et d'assurer une fixation axiale du tube de guidage (10) dans sa direction longitudinale.

2. Dispositif (1) selon la revendication 1, **caractérisé en ce qu'**une nervure (38) s'étend sur la surface intérieure de l'U de l'une branche de celle-ci via la portion incurvée de l'U à l'autre branche de celle-ci.

3. Dispositif (1) selon la revendication 1 ou 2, **caractérisé en ce que** la pince en U (1) présente au moins un bossage (7,8; 15,16; 27,28; 36,37; 38',38"; 38',39"; 43,44; 47',47") sur chacune desdites branches.

4. Dispositif (1) selon l'une quelconque des revendications 1 à 3, **caractérisé en ce que** la jambe de fixation (5,6) est configurée soit comme une agrafe rigide soit comme une plaque effilée, mince et plate.

5. Dispositif (1) selon l'une quelconque des revendications 1 à 4, **caractérisé en ce que** la pince (1) est constituée d'un matériau en feuille en métal, en métal moulé ou en matière plastique moulée.

6. Dispositif (1) selon l'une quelconque des revendications 1 à 5, **caractérisé en ce que** la pince (1) est constituée d'un matériau en métal moulé ou en matière plastique moulée, et que les deux branches (3,4) de la pince en U sont équipées dudit manchon de clou de fixation (26) ou présentent la patte saillante (45).
